# EUROPEAN PATENT APPLICATION

(11) **EP 1 939 663 A1**
(43) Date of publication of application: **02.07.2008**
(21) Application number: 06301305.6
(22) Date of filing: 29.12.2006
(51) Int. Cl.: G02B 17/06

(54) **Projection display with an aspheric mirror**

(71) Applicant: Thomson Licensing, 92100 Boulogne-Billancourt (FR)
(72) Inventor: Cadio, Michel, Carmel, IN 46032 (US)
(74) Representative: Ruellan-Lemonnier, Brigitte

(57) **Abstract**

A projection display having a folded light ray path including an aspheric mirror (115) is described. The aspheric mirror (115) is positioned at the output of the light engine (120) and folds the light ray path toward a flat mirror (125). The light ray path is directed by the flat mirror (125) onto the display screen (130). The aspheric mirror (115) positioned at the output of the light engine (120) reduces the depth of the display cabinet used to house the projection device as well as the height of the screen.

## Description

### BACKGROUND OF THE INVENTION

### Field of the Invention

The invention relates generally to a projection display and, in particular to mirrors used in a projection display.

### Description of the Background Art

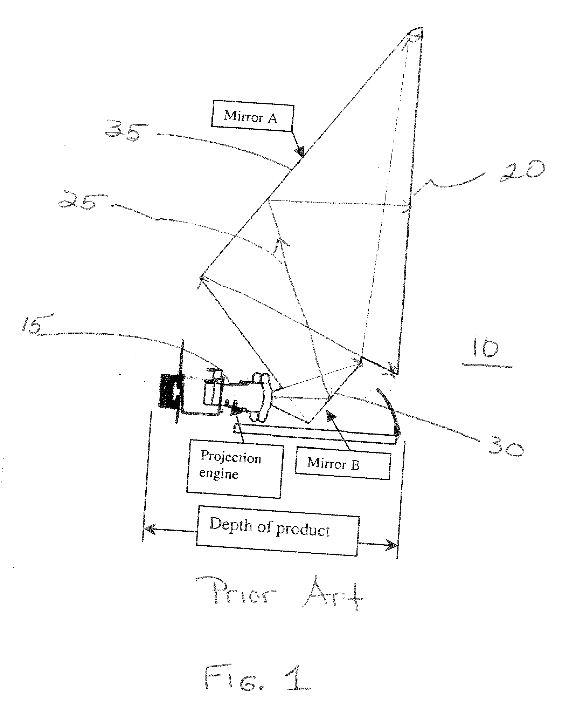

The trend for projection displays is to reduce the depth of the display cabinet. Some projection displays 10 include a light/projection engine 15 that is mounted below a screen 20, as shown in FIG. 1. Such projection televisions require folding of a light ray path 25 in order to project images on the screen 20.

Previous projection disp lays have used two flat mirrors 30, 35 to fold their light ray paths. Such an arrangement requires that a predetermined distance be maintained between the mirrors, constraining the ability to reduce the depth of the display cabinet used to house the projection device.

### SUMMARY OF THE INVENTION

The present invention relate s to a projection display having a folded light ray path including an aspheric mirror. The aspheric mirror is positioned at the output of the light engine and folds the light ray path toward a flat mirror. The light ray path is directed by the flat mirror onto the display screen. The aspheric mirror positioned at the output of the light engine reduces the depth of the display cabinet used to house the projection device as well as the height of the screen.

### BRIEF DESCRIPTION OF THE DRAWINGS

The invention will now be described in greater detail, with relation to the accompanying drawings, in which
FIG. 1 shows a prior art projection display;
FIG. 2 depicts a side view of the projection display of the present invention having an aspheric mirror positioned at the output of the light engine ; and
FIG. 3 shows a comparison of the product depth and screen height between a projection display having an aspheric mirror positioned at the output of the light engine and a projection display having a flat mirror positioned at the output of the light engine.

### DETAILED DESCRIPTION

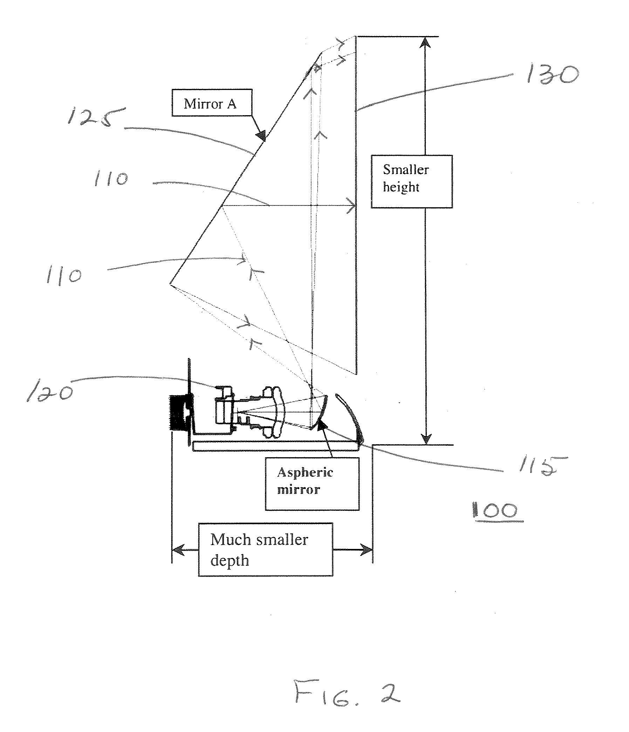

Referring to FIG. 2, a projection display 100 having a folded light ray path 110 including an aspheric 115 mirror is shown. The aspheric mirror 115 is positioned at the output of the light engine 120 and folds the light ray path toward a flat mirror 125. The light ray path is directed by the flat mi rror 125 onto the display screen 130. The aspheric mirror 115 positioned at the output of the light engine 120 reduces the depth of the display cabinet (not shown) used to house the projection device as well as the height at which the screen is positioned within the cabinet used to house the display device.

The light engine 120 typically includes a projection lamp (not shown) and a color wheel (not shown). The image ray path 110 from the light engine 120 is directed toward the aspheric mirror 115 that is coupled to the output of the light engine 1 20 and is positioned on a line or close to a line that is centered with such output. The aspheric mirror 115 is preferably positioned to direct the light output from the light engine 120 toward flat mirror 125 form ing a folded ray path 110 for the light output from the light engine 120 . The aspheric mirror 115 positioned at the output of the light engine 120 reduces the depth of the display cabinet (not shown) used to house the projection device as well as the heigh t at which the screen is positioned within the cabinet used to house the display device.

One exemplary aspheric mirror 115 may have a concave surface facing the output of the light engine 120. Other suitable aspheric mirrors may have a convex surface facing the light engine 120 or other curved surface facing the output of the light engine 120.

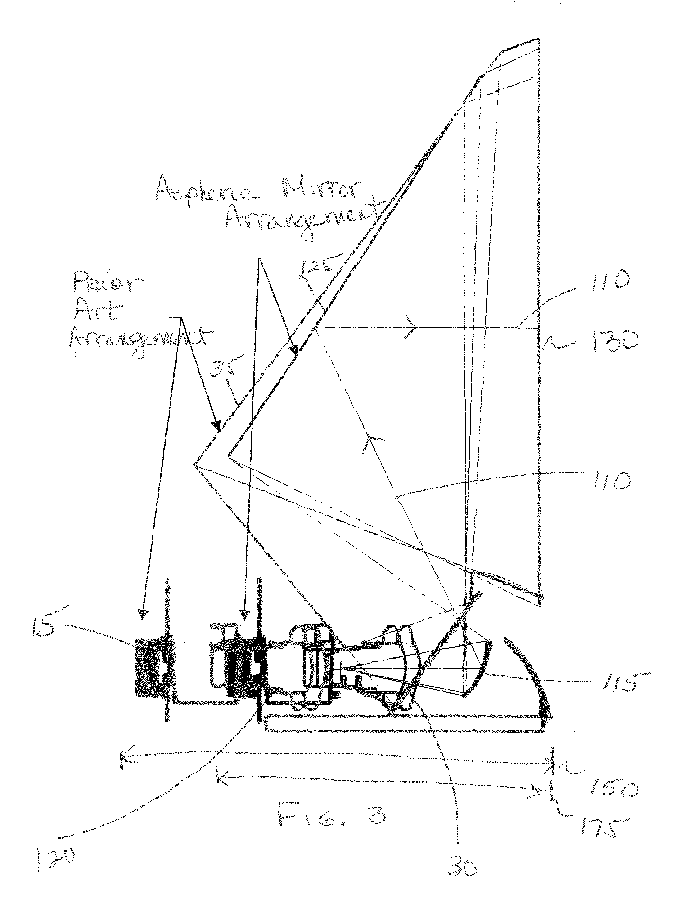

FIG. 3 illustrates the advantages of positioning the aspheric mirror 115 at the output of the light engine 120 to reduce the depth of the display cabinet. In FIG. 3, the prior art arrangement shown in FIG. 1 is superimposed over the aspheric mirror arrangement of the present invention shown in FIG. 2. The display depth 150 needed for the prior art arrangement is larger then the display depth 175 needed for the aspheric mirror arrangement.

Although an exemplary projection display which incorporates the teachings of the present invention has been shown and described in detail herein, those skilled in the art can readily devise many other varied embodiments that still incorporate these teachings.

## Claims

1. A projection display, comprising:
a light engine;
a first mirror positioned to receive light output from the light engine, wherein the first mirror is aspheric ;
a second mirror positioned to receive light from the first mirror and project it toward a screen.

2. The projection display of claim 1 wherein the first mirror has one of a concave surface and a convex surface.

3. The projection display of claim 1 wherein the second mirror has a flat surface.

4. A projection system, comprising:
a light engine;
a first mirror positioned to receive light output from the light engine, wherein the first mirror is aspheric ;
a second mirror positioned to receive light from the first mirror and project it toward a screen.

5. The projection system of claim 4 wherein the first mirror has one of a concave surface and a convex surface.

6. The projection system of claim 4 wherein the second mirror has a flat surface.
